# EUROPEAN PATENT APPLICATION

(11) **EP 3 653 537 A1**
(43) Date of publication of application: **20.05.2020**
(21) Application number: 18205932.9
(22) Date of filing: 13.11.2018
(51) Int. Cl.: B65G 1/04, B65G 1/06, E04H 6/18

(54) **STORAGE SYSTEM**

(71) Applicant: Logevo AB, 34324 Älmhult (SE)
(72) Inventor: LANGE, Joakim, 211 48 Malmö (SE)
(74) Representative: Hansson Thyresson AB

(57) **Abstract**

A storage system for handling and storing goods is provided, the system comprising a framework; at least one elongate rail unit (20a, 20b) extending along the framework, on which rail unit (20a, 20b) a transportation unit (8) is configured to operate; a storage bed (11) arranged above the rail units (20a, 20b), and extending parallel to the extension of said rail units (20a, 20b), the storage bed (11) being configured to support pallets and/or goods (10) during storage. The storage bed (11) is formed by elongate members (24) arranged horizontally next to each other forming gaps (X4) there between. The transportation unit (8) comprises a carrying unit (17) comprising elongate members (23) arranged horizontally next to each other. The carrying unit (17) of the transportation unit (8) is configured to be displaceable in a vertical direction, and, during said displacement, the elongate members (23) of the carrying unit (17) are configured to pass between the elongate members (24) of the storage bed (11).

## Description

### TECHNICAL FIELD

The present invention relates to a storage system for handling and storing goods, and a method of transporting goods to a predetermined storage location in such storage system.

### BACKGROUND

Goods storage systems today tend to grow larger and get more automated with less manual handling. Often, the storage system is an arrangement of storage levels and storage rows creating a complex system. The storage systems should be able to handle the supply of goods entering the storage system to the storage levels and storage rows, the storage of the goods in predetermined positions within the storage system and picking of goods exiting the storage system.

Many storage systems today use standard components which tend to be bulky and heavy when storing and handling the goods. These types of components often do not have an impact on a smaller storage system but for a larger storage system, which often handles many different types of goods when it comes to size and/or weight, it could mean that the total weight of these components has a negative effect on the construction.

It is common to use wood pallets to transport goods on, both outside and within the storage system. Pallets are not always a favourable choice of load carrier, and other solutions exist. Thus, there is a need for a storage system that can handle also these other load carriers.

From the above it is understood that there is room for improvements and the invention aims to solve or at least mitigate the above and other problems.

### SUMMARY

An object of the present invention is to provide a new type of transportation unit for transporting goods within a storage system which is improved over prior art and which eliminates or at least mitigates the drawbacks discussed above. More specifically, an object of the invention is to provide a transportation unit that can handle both wood pallets, as well as other types of load carriers, and goods not supported by any load carrier. These objects are achieved by the technique set forth in the appended independent claims with preferred embodiments defined in the dependent claims related thereto.

According to embodiments of the invention, the above problems are solved by a transportation unit in combination with a transport supporting arrangement.

In a first aspect, a storage system for handling and storing goods is provided. The system comprises a framework; at least one elongate rail unit extending along the framework, on which rail unit a transportation unit is configured to operate; a storage bed arranged above the rail units and extending parallel to the extension of said rail units. The storage bed is configured to support pallets and/or goods during storage. The storage bed is formed by elongate members arranged horizontally next to each other forming gaps there between. The transportation unit comprises a carrying unit comprising elongate members arranged horizontally next to each other. The carrying unit of the transportation unit is configured to be displaceable in a vertical direction, and, during said displacement, the elongate members of the carrying unit are configured to pass through the gaps between the elongate members of the storage bed. This storage system is favourable in that no pallets need to be used in order to store goods. Any type of goods can be placed on the storage bed, as long as it is larger than the distance between each elongate member, so as to not fall between the elongate members. However, the dimension of the elongate members may be adjusted to the application and the size of the intended goods when the storage system is designed. Individual goods units can be retrieved by the transportation unit, and not only goods that has ended up on the same pallet.

In one embodiment, the carrying unit of the transportation unit comprises a carrying portion and a support portion. Preferably, the support portion is arranged on an upper side of the transportation unit and extends in the same direction as the rail units. Also, the carrying portion preferably comprises the elongate members which are arranged perpendicular against the support portion. This design of the carrying unit enables the carrying portion to be raised and lowered between two positions, one above the storage bed, and one below the storage bed.

Preferably, the carrying unit is displaceable in the vertical direction by means of a displacement means. This is favourable when the carrying unit is raised and/or lowered between its two positions.

Preferably, the loaded position is an upper position and the unloaded position is a lower position. In the loaded position, the carrying portion is configured to be located above the storage bed, and in the unloaded position, the carrying portion is configured to be located below the storage bed. Thus, when the carrying unit is loaded with goods, the carrying unit is in its raised position, with the carrying portion located above the storage bed. When the carrying unit is not loaded with goods, the carrying unit is in its lowered position, with the carrying portion located below the storage bed. Thus, the carrying unit can be transported below goods which is stored on the storage bed when it is in the unloaded, lowered position.

In one embodiment, each elongate member of the storage bed comprises a gap provided approximately in a middle portion of the member. The gap is configured to accommodate the support portion of the carrying unit. This is advantageous when the carrying unit is raised and/or lowered. Then, the support portion extends through gap.

The elongate members of the storage bed may extend horizontally and perpendicular to the extension of the rail units. It is favourable that the elongate members are horizontal, such that goods do not slip of. I order to be able to pass between the elongate members of the storage bed, it is favourable that the elongate members of the carrying unit extend perpendicular to the extension of the rail units.

The gap between the elongate members of the storage bed may be larger compared to a diameter of the elongate members of the transportation unit. This gap may thus be configured to accommodate the elongate members of the carrying unit when the carrying portion is being displaced between the upper and lower positions. This is favorable in order to allow the elongate members of the carrying unit to pass between the elongate members of the storage unit, and thus allow the carrying unit to be displaced between its two positions.

In one embodiment, the framework of the storage system comprises at least one base unit arranged perpendicular to the extension of the at least one rail unit. The base unit is configured to support said at least one rail unit. It is favourable to have a base unit to support the rail units, in order to bring stability to the storage system.

In one embodiment, the framework comprises a first set of pre-mounted side units and a second set of pre-mounted side units. Each side unit comprises at least two vertical beams, and the side units of each set are arranged beam to beam, spaced apart and subsequently of each other, and wherein said second set of side units is arranged spaced and opposite of said first set of side units.

In a second aspect, a method of transporting goods to a predetermined storage location in a storage system is provided. The method comprises the following steps:
- arranging the carrying unit of the transportation unit in a loaded position;
- loading the goods on the carrying unit;
- operating the transportation unit to the predetermined storage location;
- displacing the carrying unit to an unloaded position, thereby locating the goods on the storage bed. This method is advantageous in that no pallets are required in order to transport goods into or out of the storage system, and no pallets are required during the storage. Thus, the cost for pallets is eliminated. It is also an environmentally beneficial solution, in that no material for pallets is needed. Further, single units of goods can be retrieved from the storage system. Even if two or more units were brought into the system at the same time, one of them only can be collected and retrieved by the carrying unit, as long as the pieces of goods were placed next to each other on the storage bed.

In one embodiment, in the step of displacing the carrying unit, the elongate members of the carrying unit passes the gaps between the elongate members of the storage bed. In one embodiment, in the step of displacing the carrying unit, said unit is displaced to below the storage bed, and the goods remain on the storage bed. Thus, carrying unit is displaced between an upper, loaded position, and a lower, unloaded position.

### BRIEF DESCRIPTION OF THE DRAWINGS

Embodiments of the invention will be described in the following; references being made to the appended diagrammatical drawings which illustrate non-limiting examples of how the inventive concept can be reduced into practice.
Fig. 1 is a schematic top view of several storage rows of a storage system according to an embodiment;
Fig. 2 is a schematic side view of several storage levels of the storage system in Fig. 1;
Fig. 3 is a schematic front view of the storage levels of the storage system in Fig. 2;
Fig. 4 is a schematic top view of a storage level of the storage system in Fig. 2;
Fig. 5 is a schematic top view of a carrying unit according to an embodiment;
Fig. 6 is a schematic front view of the carrying unit in Fig. 5 in a raised position;
Fig. 7 is a schematic front view of the carrying unit in Figs 5-6 in a lowered position;
Fig. 8 is a schematic side view of the carrying unit in Figs 5-7 in the raised position;
Fig. 9 is a schematic front view of the carrying unit in the raised position in the storage system;
Fig. 10 is a schematic front view of the carrying unit in the lowered position in the storage system;
Fig. 11 is a schematic top view of the carrying unit in the storage system with goods; and
Fig. 12 is a schematic front view of the carrying unit in the lowered position in the storage system.

### DETAILED DESCRIPTION

Hereinafter, certain embodiments will be described more fully with reference to the accompanying drawings. The invention may, however, be embodied in many different forms and should not be construed as limited to the embodiments set forth herein; rather, these embodiments are provided by way of example so that this disclosure will be thorough and complete, and will fully convey the scope of the invention, such as it is defined in the appended claims, to those skilled in the art. If nothing else is stated, different embodiments may be combined with each other.

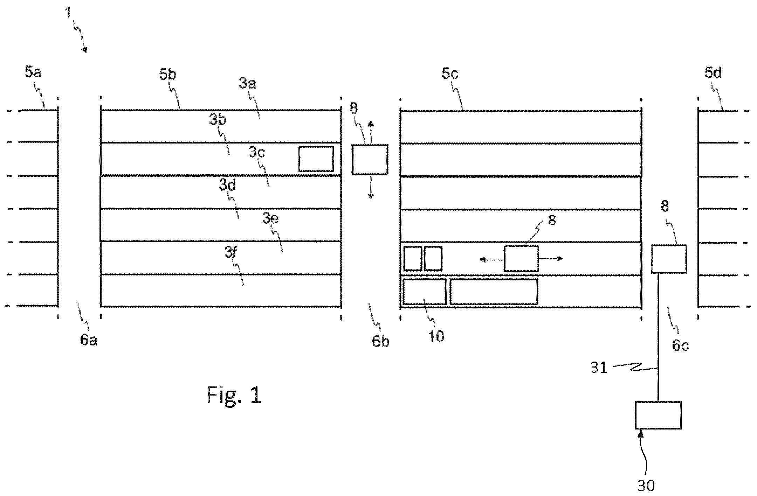

With reference to Fig. 1, the storage system 1 is constructed in several storage levels 2a-c with several storage rows 3a-f, in several storage sections 5a-d. The storage sections 5a-d are separated by transportation aisles 6a-c in which goods 10 are transported to and from their storage location. The transportation aisles 6a-c are designed to support different types of transportation units 8. One type of transportation unit 8 is a supply transfer cart for transporting goods 10 to be supplied within the storage system 1 and another type of transportation unit is a picker transfer cart for transporting picked up goods 10 from within the storage system 1. Further, the transportation aisles 6a-c are arranged perpendicular to the storage rows 3a-f on every storage level 2a-d.

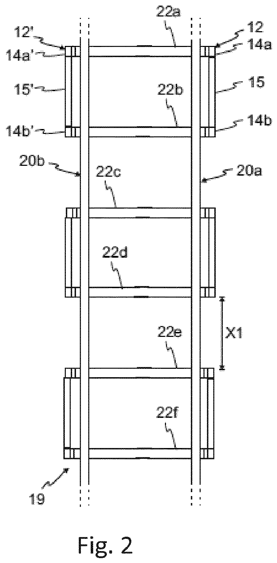

Each storage section 5a-d, with its storage rows 3a-f and storage levels 2a-d, are constructed to include several pre-mounted side units 12a-c. A first set of side units 12 and a second set of side units 12' create the sides of a first storage row 3, see e.g. Fig. 2. Each side unit 12a-c of each set 12, 12' has two vertical beams 14a, 14b, 14a', 14b' and in between a plurality of racks 15.

In an assembled state of the storage system 1 the side units 12 of each set are arranged beam to beam, spaced apart and subsequently of each other. Thus, the side units 12 are arranged on a straight line with a predetermined distance X1 between each other. The number of side units 12 in each storage row 3a-f may of course vary depending on the area which the storage system 1 should cover. Also, the distance X1 between respective side units may vary depending of e.g. the estimated load they should be able to carry.

Further, the second set of side units 12' is arranged spaced and opposite of the first set of side units 12, such that a space is defined between the two sets of side units 12, 12'. The space between the two sets of side units 12, 12' is formed to house a number of different components, such as a base unit 22a-f, rail units 20a, 20b, and a storage bed 11, which is described in more detail below. The mentioned components could all be a part of a pre-mounted transport supporting arrangement 19.

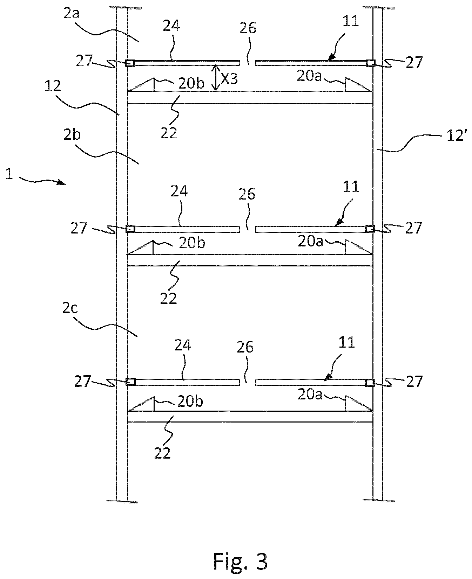

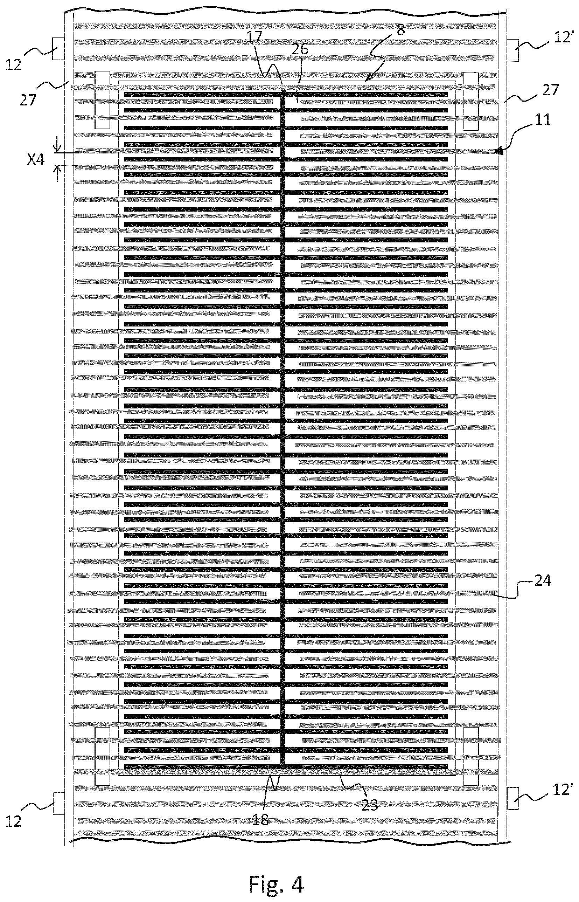

With reference to Figs 3 and 4, the storage bed 11 is arranged on a distance X3 spaced from the base unit 22. It is attached to the side units 12, 12' in the same way as the base unit 22, such that it is parallel with the base unit 22. The storage bed comprises elongate members 24 which are interconnected by means of an intermediate member 27 which in turn is attached to the side members 12, 12'. The elongate members 24 do not extend all the way between two adjacent side units 12, 12', but a gap 26 is formed in each elongate member 24, approximately in the middle between the adjacent side units 12, 12'. Thus, each elongate member 24 comprises two parts, each extending from respective intermediate member 27. The elongate members 24 are provided at a distance X4 between each other. This distance may vary according to the applications, e.g. depending on the type of goods or package which is being loaded on the storage bed. The storage bed 11 extends along the entire rows 3a-f, such that goods can be laid down anywhere along the row extension.

The pre-mounted transport supporting arrangement 19 is mounted as one unit when constructing the storage system 1 in order to decrease the time spent on building the system. Several of these transport supporting arrangements 19 are arranged in each storage row, on each storage level, see Figs 2 and 3. For example, one transport supporting arrangement 19, as illustrated in Fig. 2, includes two parallel rail units 20a, main body 25, and six base units 22a-f. The pre-mounted arrangement 19 is attached to first one set of side units 12 by hooking all six base units 22a-f simultaneously to respective beams 14a-f of the first set of side units 12, and then attaching the second set of side units 12' and its beams 14a-f' to the opposite side of the base units 22a-f. An alternative embodiment of the pre-mounted transport supporting arrangement 19 includes more or fewer components than the illustrated example. In a further alternative embodiment, there are no pre-mounted transport supporting arrangements, but all components of the storage system are assembled on site when building the storage system.

However, the components arranged between two oppositely arranged side units 12, 12', see Fig. 4, are two spaced apart elongated rail units 20a, 20b, a base unit 22 and a storage bed 11, which is further described below. The rail units 20a, 20b extend parallel to the extension of the first and second set of side units 12, 12', along the entire extension of the storage row 3a. A first rail unit 20a is arranged in the vicinity of the first side unit 12 and a second rail unit 20b is arranged in the vicinity of the second side unit 12'. The rail units 20a, 20b may either be attached directly to the side units 12, 12', e.g. to the beams 14a, 14a', or to the base unit 22, which in turn is attached to the side units 12, 12'. The two rail units 20a, 20b are, in the illustrated embodiment, attached to an upper surface of the base unit 22. The space between the rail units 20a, 20b should be enough for a transportation unit 8 to operate in.

Each base unit 22 extends between the side units 12, 12' perpendicular to the extension of the sets of side units 12, 12' and the elongated rail units 20a, 20b. The elongated rail units 20a, 20b are, in the illustrated embodiment, attached to the upper surface of the base unit 22. Throughout the extension of the two elongated rail units 20a, 20b of each storage row 3a-f there are provided several base units 22a-f, see Fig. 2. The number of base units 22 per storage row 3a-f depends e.g. on the length of the storage row 3a-f, the load that the rail units 20a, 20b should be able to bear and possible construction limitations. In an alternative embodiment, the base unit can be seen as a floor for each storage row 3 of each storage level 2. It may then be arranged between the oppositely located side units 12 extending along the entire storage row 3, i.e. between two transportation aisles 6. The base unit 22 is then attached to each beam of each side unit 12 along the extension of the storage row 3.

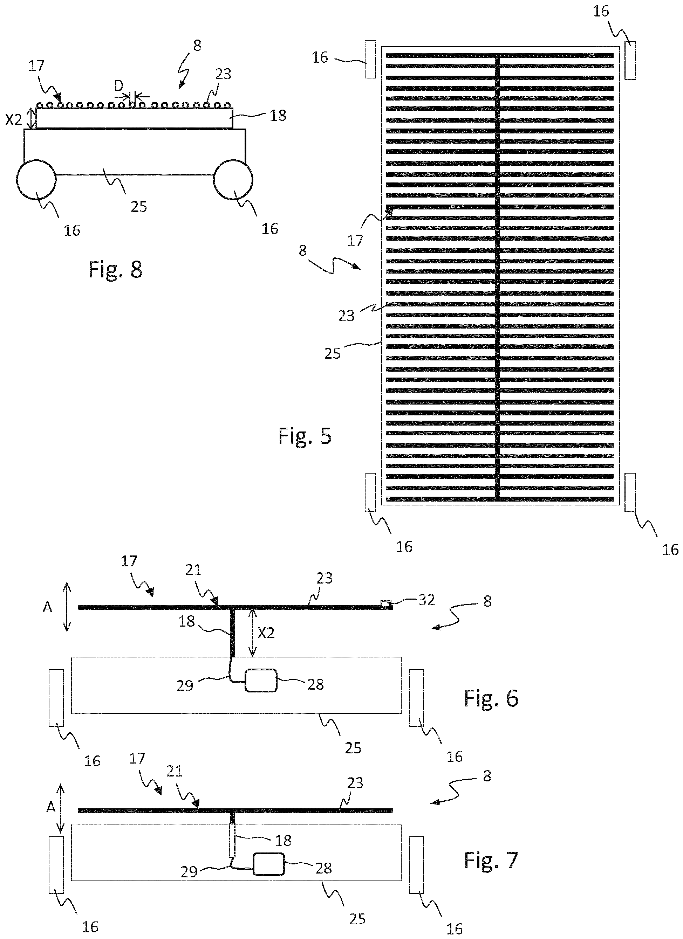

A transportation unit 8 in the form of a supply transfer cart is configured to run on the rail units 20a, 20b and supply goods 10 into the storage 1. The supply cart 8 is shown in Figs 5-8. It comprises a main body 25, which is provided with wheels 16. There are preferably four wheels, one provided in each corner of the main body 25. Additional wheels 16 may be provided for extra stability of the cart 8. The cart 8 further comprises a carrying unit 17. The carrying unit 17 comprises a support portion 18 and a carrying portion 21. The support portion 18 is formed as a rectangular block with a length approximately corresponding to the length of the cart 8. The height X2 of the support portion 18 is larger than the distance X3 between one base unit 22 and its adjacent storage bed 11. The carrying portion 21 comprises a number of elongate members 23. The elongate members 23 are attached to the support portion 18 such that approximately half the length of each elongate member 23 extend on each side of the support portion 18. This is best seen in Fig. 5.

The transportation unit 8 further comprises displacement means 28 operatively connected to the carrying unit 17 by means of connection means 29. The carrying unit 17 is movable by means of the displacement means 28 in the direction of arrow A in Figs 6 and 7. In other words, the displacement means 28 is configured to raise and lower the carrying unit 17 in relation to the main body 25 of the transportation unit 8. Thus, the elongate members 23 of the carrying unit 17 has a first position, shown in Fig. 6, located on the distance X2 from the main body 25. In a second position, shown in Fig. 7, the elongate members 23 are moved closer to the main body 25. In the second position, the support portion 18 extends partly into the main body 25. In an alternative embodiment, the support portion 18 is embodied differently and instead of being lowered into the main body 25, it is e.g. folded or compacted such that the elongate members 23 assume the second position. The first and the second position are also referred to as a loaded position and an unloaded position, or an upper and a lower position, respectively.

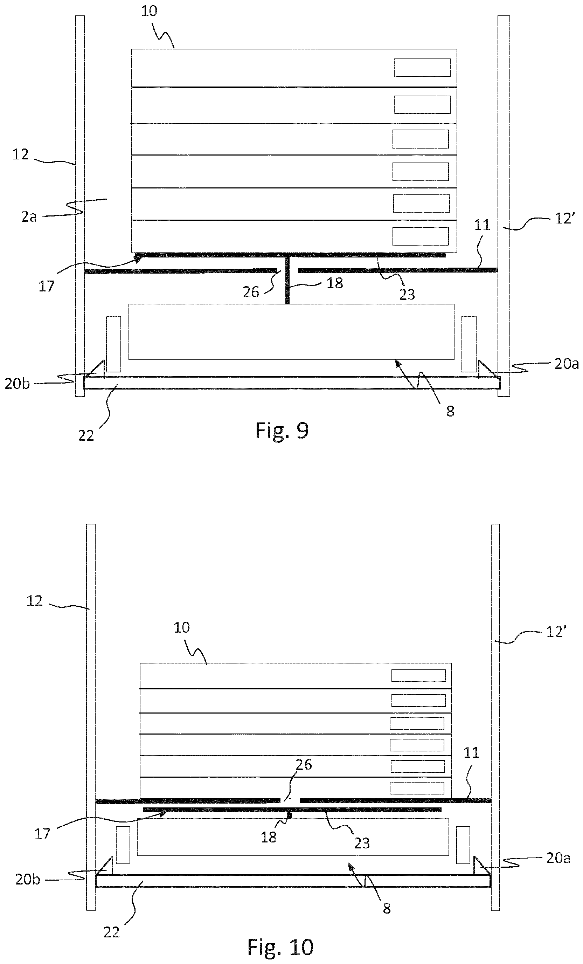

The use of the supply transport and the storage system is shown in Figs 9-12. Fig. 9 shows the supply transfer cart 8 on the rails 20a, 20b at a level 2a of the storage system 1. The main body 25 of the cart 8 is thus located between the base unit 22 and the storage bed 11. The cart 8 is loaded with goods 10, and therefore, the carrying unit 17 is in the loaded, upper position. In the upper position, the carrying portion 21 of the carrying unit 17 is located above the storage bed 11. Thus, the goods 10 is located above the storage bed 11 as well. The support portion 18 of the carrying unit 17 extends through the gap 26 in the storage bed 11. Thus, the cart 8 can drive, or be transported, along the rail units 20a, 20b, with the main body 25 below the storage bed 11.

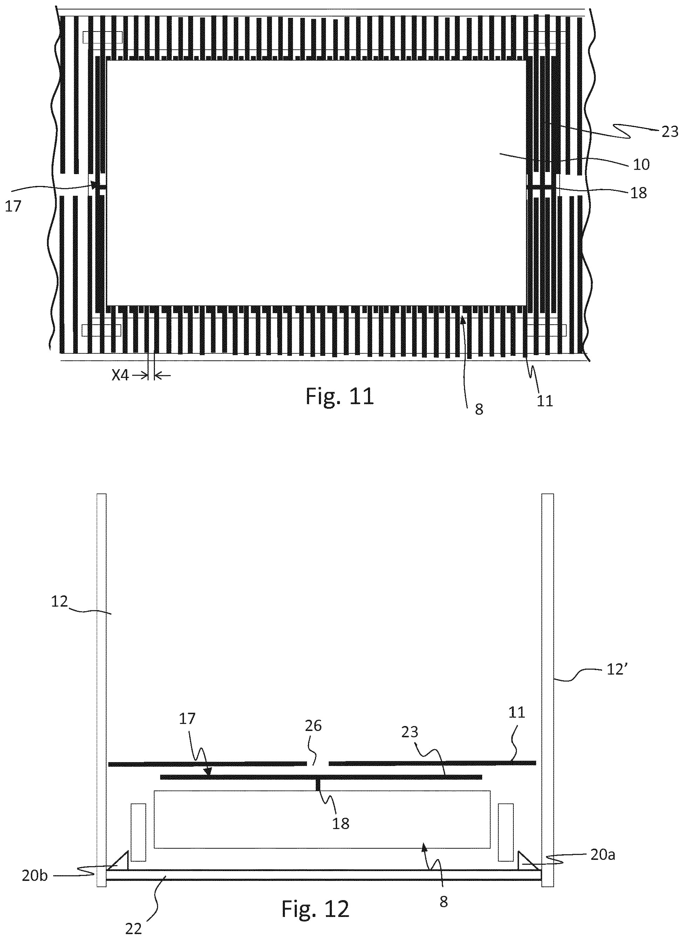

When the transfer cart 8 has reached a predetermined storage location for carried goods, it is time to unload the goods 10 from the cart 8. The support portion 18 of the carrying unit 17 is lowered, such that the elongate members of the carrying unit 17 passes between the elongate members 24 of the storage bed 11, i.e. through the gaps X4. This is shown in Fig. 4, but without the loaded goods 10 for better visibility, and in Fig. 11 from above, with goods 10. The goods 10 remains on the elongate members 24 of the storage bed 11. The goods 10 has thus reached its storage position. This is shown in Fig. 10. The goods 10 is above the storage bed 11, and the carrying portion 21 of the carrying unit 17 is below the storage bed 11. Thus, the entire cart 8 is below the storage bed 11, and it can drive off to pick up another goods 10, as shown in Fig. 12.

The positions of the goods 10 and transport units 8 and are detected and controlled by control elements and sensors which comprise a CPU 30, operably connected to e.g. a memory, time controllers, sensors 32, a communication device, and a user interface. The computer unit/CPU comprises a means in the form of a program of conventional type. The CPU 30 can start up a computer screen via a wireless or wired connection. The CPU 30 controls, on the one hand, the transportation unit 8 via a connection 31, which can be wired or wireless, and, on the other hand, the displacement means 28 via a connection, which can likewise be wired or wireless. The sensors 32 transmit information to the CPU 30 regarding the position of the elongate members 23 of the cart 8 in relation to the elongate members 24 of the storage bed 11. Thus, the cart 8 can be automatically positioned such that the elongate members 23 of the cart 8 are positioned directly below the gaps X4 between the elongate members 24 of the storage bed 11, when the carrying unit 17 is about to be raised or lowered. The sensors 32 may be any kind of suitable sensor. It may be a transceiver, or an individual transmitter and/or receiver. The sensors 32 may be arranged on the cart 8, on the storage bed 11, or on both of them.

Although the inventive concept has been described above with reference to specific embodiments, it is not intended to be limited to the specific form set forth herein. Rather, the invention is limited only by the accompanying claims. Other embodiments than the specific above are equally possible within the scope of these appended claims.

## Claims

1. A storage system for handling and storing goods, comprising:
a framework (12, 14, 15);
at least one elongate rail unit (20a, 20b) extending along the framework, on which rail unit (20a, 20b) a transportation unit (8) is configured to operate;
a storage bed (11) arranged above the rail units (20a, 20b), and extending parallel to the extension of said rail units (20a, 20b), the storage bed (11) being configured to support pallets and/or goods (10) during storage, wherein said storage bed (11) is formed by elongate members (24) arranged horizontally next to each other forming gaps (X4) there between;
wherein the transportation unit (8) comprises a carrying unit (17) comprising elongate members (23) arranged horizontally next to each other,
wherein the carrying unit (17) of the transportation unit (8) is configured to be displaceable in a vertical direction (A), and, during said displacement, the elongate members (23) of the carrying unit (17) are configured to pass through the gaps (X4) between the elongate members (24) of the storage bed (11).

2. The storage system according to claim 1, wherein the carrying unit (17) of the transportation unit (8) comprises a carrying portion (21) and a support portion (18), preferably wherein the support portion (18) is arranged on an upper side of the transportation unit (8) and extending in the same direction as the rail units (20a, 20b), and preferably wherein the carrying portion (21) comprises the elongate members (23) which are arranged perpendicular against the support portion (18).

3. The storage system according to claim 1 or 2, wherein the carrying unit (17) is displaceable in the vertical direction (A) by means of a displacement means (28).

4. The storage system according to any one of the preceding claims, wherein the loaded position is an upper position and the unloaded position is a lower position.

5. The storage system according to claim 4, wherein, in the loaded position, the carrying portion (21) is configured to be located above the storage bed (11), and wherein, in the unloaded position, the carrying portion (21) is configured to be located below the storage bed (11).

6. The storage system according claim 2, wherein each elongate member (24) of the storage bed (11) comprises a gap (26) provided approximately in a middle portion of the member (24), said gap (26) being configured to accommodate the support portion (18) of the carrying unit (17).

7. The storage system according to any of the preceding claims, wherein the elongate members (24) of the storage bed (11) extend horizontally and perpendicular to the extension of the rail units (20a, 20b).

8. The storage system according to any one of the preceding claims, wherein the gap (X4) between the elongate members (24) of the storage bed (11) is larger compared to a diameter (D) of the elongate members (23) of the transportation unit (8).

9. The storage system according to claim 4, wherein the gap (X4) is configured to accommodate the elongate members (23) of the carrying unit (17) when the carrying portion (21) is being displaced between the upper and lower positions.

10. The storage system according to claim 1 or 2, wherein the framework comprises at least one base unit (22) arranged perpendicular to the extension of the at least one rail unit (20a, 20b), said base unit (22) being configured to support said at least one rail unit (20a, 20b).

11. The storage system according to any one of the preceding claims, wherein the framework comprises a first set of pre-mounted side units (12) and a second set of pre-mounted side units (12'), wherein each side unit (12) comprises at least two vertical beams (14a, 14b), wherein said side units (12) of each set are arranged beam to beam, spaced apart and subsequently of each other, and wherein said second set of side units (12') is arranged spaced and opposite of said first set of side units (12).

12. Method of transporting goods to a predetermined storage location in a storage system according to any one of the preceding claims, the method comprising the following steps:
- arranging the carrying unit (17) of the transportation unit (8) in a loaded position;
- loading the goods (10) on the carrying unit (17);
- operating the transportation unit (8) to the predetermined storage location;
- displacing the carrying unit (17) to an unloaded position, thereby locating the goods (10) on the storage bed (11).

13. The method according to claim 12, wherein in the step of displacing the carrying unit (17), the elongate members (23) of the carrying unit (17) passes the gaps (X4) between the elongate members (24) of the storage bed (11).

14. The method according to claim 12 or 13, wherein in the step of displacing the carrying unit (17), said unit (17) is displaced to below the storage bed (11), and the goods (10) remain on the storage bed (11).
